(19) Europäisches Patentamt
European Patent Office
Office européen des brevets

(11) EP 0 680 556 B1

(12) **EUROPÄISCHE PATENTSCHRIFT**

(45) Veröffentlichungstag und Bekanntmachung des Hinweises auf die Patenterteilung:
**14.01.1998 Patentblatt 1998/03**

(21) Anmeldenummer: **94922223.6**

(22) Anmeldetag: **29.07.1994**

(51) Int Cl.[6]: **F02D 41/18**, F02D 13/02

(86) Internationale Anmeldenummer:
**PCT/DE94/00886**

(87) Internationale Veröffentlichungsnummer:
**WO 95/04215 (09.02.1995 Gazette 1995/07)**

(54) **VERFAHREN ZUR BERECHNUNG DER LUFTFÜLLUNG FÜR EINE BRENNKRAFTMASCHINE MIT VARIABLER GASWECHSELSTEUERUNG**

PROCESS FOR CALCULATING THE AIR FILLING VOLUME IN AN INTERNAL COMBUSTION ENGINE WITH A VARIABLE GAS EXCHANGE CONTROL

PROCEDE DE CALCUL DU NIVEAU D'AIR DE REMPLISSAGE DANS UN MOTEUR A COMBUSTION INTERNE A REGULATION VARIABLE DE L'ECHANGE GAZEUX

(84) Benannte Vertragsstaaten:
**DE FR SE**

(30) Priorität: **02.08.1993 DE 4325902**

(43) Veröffentlichungstag der Anmeldung:
**08.11.1995 Patentblatt 1995/45**

(73) Patentinhaber: **ROBERT BOSCH GMBH
70442 Stuttgart (DE)**

(72) Erfinder:
- **REUSCHENBACH, Lutz
D-70469 Stuttgart (DE)**
- **VEIL, Hans
D-71735 Eberdingen (DE)**

(56) Entgegenhaltungen:
**EP-A- 0 559 098** **DE-A- 4 018 775**
**US-A- 4 986 243**

- **PATENT ABSTRACTS OF JAPAN vol. 13, no. 130 (M-808) 30. März 1989 & JP,A,63 297 746 (MAZDA MOTOR CORP) 5. Dezember 1988**
- **SAE-Technical Paper Series, 810494, C. F. Aquino, Detroit, Michigan, February 23-27, 1981**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 680 556 B1

## Beschreibung

Stand der Technik

Die Erfindung betrifft ein Verfahren zur dynamisch korrekten Berechnung der Luftfüllung eines Zylinders bei einer Brennkraftmaschine mit variabler Gaswechselsteuerung, bspw. mit verstellbarer Einlaß- und/oder Auslaßnockenwelle, insbesondere im instationären Betrieb.

Aus der DE-OS 32 47 916 (US 4 856 465) ist eine Brennkraftmaschine bekannt, deren Steuerzeiten über eine Verdrehung einer Nockenwelle relativ zum Nockenwellenantrieb in Abhängigkeit von Betriebsparametern variiert werden. Als Beispiele von Betriebsparametern werden die Drehzahl N der Brennkraftmaschine sowie das für die Einspritzung im Rechner ohnehin ermittelte Lastsignal TI = K * Q/N verwendet, das dem auf einen Hub der Brennkraftmaschine normierten Luftdurchsatz entspricht.

Herkömmliche Lasterfassungsverfahren messen die in das Saugrohr strömende Luftmasse Q (z.B. Hitzdrahtluftmassenmesser) oder benutzen den Drosselklappenöffnungswinkel in Verbindung mit der Drehzahl oder den Saugrohrdruck Ps als Maß für die Last.

Die EP 0 559 098 zeigt einen Eingriff in die Gaswechselsteuerung einer Brennkraftmaschine mit einer Berücksichtigung des Eingriffs bei der Lasterfassung, wobei in Abhängigkeit von der Zahl stillgelegter Zylinder verschiedene Tabellen für den vol. Wirkungsgrad benutzt werden.

Das SAE-Paper 810494 nennt im Zusammenhang mit der Kraftstoffwandfilmproblematik eine Abhängigkeit des volumetrischen Wirkungsgrades von der Ventilüberschneidung, ohne Bezug zu einer variablen Ventilsteuerung.

Im Fall einer Luftmassenmessung kann die tatsächlich in den Zylinder strömende Luftmasse mit Hilfe einer Luftmassenbilanz für das Saugrohr ermittelt werden. Für die Änderung dMs der im Saugrohr enthaltenen Luftmasse Ms während des Saughubes eines Zylinders gilt:

$$dMs = Mdk - Mz \qquad [1]$$

Hierbei ist Mdk die während des Saughubs durch die Drosselklappe einströmende Luftmasse und Mz die vom Zylinder angesaugte Luftmasse.

Unter der Annahme, daß ein Anteil eta des Hubvolumens des Zylinders mit Frischgas gefüllt wird, kann Mz näherungsweise durch das Verhältnis von Saugrohrvolumen Vs und effektivem Hubvolumen Vh/Z * eta beschrieben werden:

$$Mz = \frac{Ms * Vh * eta}{Z * Vs} \qquad [2]$$

Hierbei ist Z die Zylinderzahl und Vh der Hubraum des Motors. Die Größe eta wird auch als volumetrischer Wirkungsgrad bezeichnet. Sofern sich eta nicht wesentlich ändert, folgt für die Änderung der Luftfüllung des Zylinders dMz entsprechend:

$$dMz = dMs * \frac{Vh * eta}{Z * Vs} \qquad [3]$$

Die durch die Drosselklappe einströmende Luftmasse Mdk kann mit der Hilfe der gemessenen Luftströmung Qm und der Zeitdauer dT des Saughubs als

$$Mdk = Qm * dT \qquad [4]$$

ausgedrückt werden. Die Zeitdauer dT folgt aus der Motordrehzahl N und der Zylinderzahl Z:

$$dT = \frac{2}{N * Z} \qquad [5]$$

Damit folgt für die Änderung dMz der Luftfüllung des Zylinders:

$$dMz = \frac{Vh * eta}{Z * Vs} * Qm * (\frac{2}{N * Z} - Mz) \qquad [6]$$

Aus Gleichung [6] läßt sich eine Rekursionsgleichung zur Bestimmung der Luftfüllung des Zylinders herleiten:

$$dMz = Mz(k) - Mz(k-1) \quad [7]$$

und somit:

$$Mz(k) = Mz(k-1) + \frac{Vh * eta}{Z * Vs} * (Qm * \frac{2}{N * Z} - Mz(k-1)) \quad [8]$$

Bei Brennkraftmaschinen mit variabler Gaswechselsteuerung führt diese Berechnungsvorschrift jedoch unter Umständen nicht zu optimalen Ergebnissen. Wird beispielsweise die Ventilüberschneidung, das heißt die Zeitspanne, während der Einlaß- und Auslaßventil gleichzeitig geöffnet sind, geändert, so ändert sich auch die Abgasmasse, die während der Ventilüberschneidung vom Krümmer ins Saugrohr zurückströmt. Dieses Abgas verdrängt einen Teil des Frischgases im Zylinder und sorgt damit für eine starke Veränderung des volumetrischen Wirkungsgrads eta. Damit entfallen die Voraussetzungen für die Herleitung der Gleichung [8]. Das bisherige Verfahren kann daher die Luftfüllung des Zylinders im Instationärbetrieb nicht korrekt bestimmen, was zu starken Schwankungen im Luft-Kraftstoffverhältnis, insbesondere im instationären Betrieb führt.

Im Fall einer Messung des Luftdrucks Ps im Saugrohr kann die Luftfüllung des Zylinders mittels einer einfachen Geradengleichung errechnet werden:

$$Mz = K * (Ps - Ps0) \quad [9]$$

Als weiteres Beispiel einer Lasterfassung ist die Lastsignalbildung aus Drosselklappenwinkel und der Drehzahl bekannt.

Bei Motoren mit variabler Gaswechselsteuerung zeigt sich jedoch, daß der Faktor K und der Offset PsO in Gleichung [9] stark von der Stellung der Nockenwelle und von der Drehzahl abhängig sind. Auch dieses Verfahren liefert also bei verstellbaren Nockenwellen kein ausreichend genaues Ergebnis.

Die Aufgabe der Erfindung besteht in der Angabe eines Verfahrens, das den Einfluß einer Variation der Gaswechselsteuerung auf die Lasterfassung berücksichtigt.

Die Erfindung löst diese Aufgabe durch eine Einbeziehung des Einflusses der Gaswechselsteuerung auf die Berechnung des Frischluftanteils an der Gasfüllung des Arbeitsvolumens (Zylinder) einer Brennkraftmaschine, gemäß den Merkmalen nach Anspruch 1 bzw. 4.

Vorteilhafte Weiterbildungen sind in den abhängigen Ansprüchen definiert.

Figur 1 zeigt eine Übersicht über einen Verbrennungsmotor mit verstellbaren Nockenwellen sowie einem Steuergerät zur Berechnung der Einspritzzeit gemäß der vorliegenden Erfindung.

Figur 2 verdeutlicht den Zusammenhang zwischen Saugrohrdruck, Nockenwellenstellung und Luftfüllung des Zylinders anhand eines Meßergebnisses.

Figur 3a zeigt die Ventilerhebungskurven von Einlaß- und Auslaßventil und verdeutlicht die gemessenen Nockenwellenstellungen und die Ventilüberschneidung.

Figur 3b stellt ein Flußdiagramm zur Bestimmung der Ventilüberschneidung sowie der zur Luftfüllungsberechnung benötigten Parameter für ein System mit Saugrohrdruckmessung dar.

Figur 4a und Figur 4b zeigen den Programmablauf zur Berechnung der Luftfüllung bei einem Steuerungssystem mit Saugrohrdruckmessung.

Figur 5a ist ein Flußdiagramm zur Erfassung des Signals eines Luftmassensensors.

Figur 5b zeigt den Programmablauf zur Berechnung der Luftfüllung aus der gemessenen Luftmassenströmung.

Figur 6a stellt den prinzipiellen Zeitverlauf der Nockenwellenstellung bei einer geschalteten Verstellung der Nokkenwellenposition dar.

Figur 6b zeigt ein Programm zur Bestimmung eines Schätzwertes für die Nockenwellenstellung bei fehlendem Nockenwellensensor.

Figur 1 zeigt eine Brennkraftmaschine und ein Steuergerät zur Berechnung der Einspritzzeit. Die ins Saugrohr 116 einströmende Luftmasse wird durch den Luftmassensensor 114 (Hitzdraht- oder Heißfilm-Sensor) erfaßt und dem Steuergerät 107 zugeführt. Die Stellung der Drosselklappe 101 wird mit einem Sensor 102 gemessen. Außerdem befindet sich im Saugrohr ein Fühler 111 für die Lufttemperatur sowie ggf. ein Druckfühler 103, der bei Systemen mit Saugrohrdruckmessung den Luftmassensensor 114 ersetzt.

Die vom Steuergerät 107 errechnete einzuspritzende Kraftstoffmenge wird über das Einspritzventil 106 dem Motor zugeführt.

Das Luftkraftstoffgemisch gelangt über das Einlaßventil 112 in den Zylinder 113; das Abgas wird über das Auslaßventil 112a in das Abgassystem gedrückt. Der Restsauerstoffgehalt des Abgases, der ein Maß für das Luftkraftstoffverhältnis darstellt, wird über den Sauerstoffsensor 110 erfaßt.

Die Öffnungs- und Schließzeitpunkte von Einlaß- und Auslaßventil werden über die zugehörige Einlaßnockenwelle 108 sowie die Auslaßnockenwelle 108a bestimmt. Mit Hilfe der Verstelleinrichtungen 109 und 109a können die Stellungen der Nockenwelle und damit die Lage der Öffnungs- und Schließzeitpunkte der Einlaß- und Auslaßventile relativ zum oberen Totpunkt des Kolbens beeinflußt werden. Die Stellungen der Einlaß- und Auslaßnockenwelle werden mit den Sensoren 115 bzw. 115a gemessen. Ferner verfügt das System über einen Sensor 104 zur Erfassung der Drehzahl sowie der Kurbelwellenstellung und einen Temperaturfühler 105 zur Erfassung der Kühlwassertemperatur.

Figur 2 stellt anhand eines Meßergebnisses den Zusammenhang zwischen Luftfüllung des Zylinders und Saugrohrdruck dar. Die Luftfüllung wird dabei durch die zugehörige Einspritzdauer angegeben, die erforderlich ist, um ein stöchiometrisches Luftkraftstoffverhältnis einzustellen. Der Zusammenhang zwischen Luftfüllung und Saugrohrdruck wurde bei einer Motordrehzahl von 1800 U/min für zwei verschiedene Nockenwellenstellungen gemessen. Kurve 1 entspricht einer Ventilüberschneidung von 14 Grad Kurbelwinkel. Kurve 2 wurde bei einer deutlich größeren Ventilüberschneidung (44 Grad Kurbelwinkel) gemessen, das heißt Einlaß- und Auslaßventile sind für einen deutlich längeren Zeitraum gleichzeitig geöffnet als bei Kurve 1. Daher kann bei der zweiten Messung während der Überschneidungsphase wesentlich mehr Abgas ins Saugrohr zurückströmen und eine entsprechende Menge Frischgas verdrängen. Dementsprechend ist bei Messung 2 bei gleichem Saugrohrdruck die Luftfüllung geringer als bei Messung 1.

In beiden Fällen läßt sich jedoch die Luftfüllung aus dem Saugrohrdruck mit Hilfe der Geradengleichung [9] bestimmen:

$$Mz = K * (Ps - Ps0) \qquad [9],$$

wobei der Verstärkungsfaktor K und der Offset Ps0 von der Nockenwellenstellung und der Drehzahl abhängig sind.

Figur 3a und Figur 3b beschreiben ein mögliches Verfahren zur Ermittlung der Nockenwellenstellung. Figur 3a zeigt die Ventilerhebungskurven von Einlaß- und Auslaßventil. Der Sensor 115 erfaßt den Öffnungswinkel Weö des Einlaßventils, gemessen ab Zünd-OT. Der Sensor 115a liefert den Schließzeitpunkt Was des Auslaßventils, ebenfalls ab Zünd-OT gemessen.

Für den Restgasanteil und damit für den Einfluß auf die Luftfüllung ist, wie bereits beschrieben, insbesondere die Ventilüberschneidung wichtig, daß heißt die Länge Wü des Bereichs, in dem sowohl Einlaß- als auch Auslaßventil geöffnet sind. Deshalb genügt es, anstelle der beiden Nockenwellenstellungen Weö und Was lediglich die Ventilüberschneidung Wü zur Berechnung der Luftfüllung heranzuziehen.

Das Flußdiagramm in Figur 3b beschreibt ein Programm zur Bestimmung der Ventilüberschneidung sowie der Parameter, die zur Berechnung der Luftfüllung benötigt werden. Das Programm wird in einem hinreichend schnellen Zeitraster (z.B. alle 100 ms) gestartet.

In Schritt 301 und 302 werden die Signale der Sensoren 115 und 115a ausgewertet und die Nockenwellenstellungen Weö und Was im Steuergeräte-RAM abgelegt.

In Schritt 303 wird die Ventilüberschneidung als Differenz von Was und Weö berechnet. Falls die Nockenwellenstellungen keine Ventilüberschneidung ergeben, wenn also Ein- und Auslaßventil nicht gleichzeitig geöffnet sind, ergibt sich in Abfrage 304 ein negativer Wert für Wü. In diesem Fall wird in Schritt 305 die Ventilüberschneidung zu 0 gesetzt.

Anschließend wird die über den Drehzahlfühler 104 gemessene Motordrehzahl N eingelesen (Schritt 306). Zur Berechnung der Luftfüllung gemäß Gleichung [9] wird ein Offset Ps0 und ein Proportionalitätsfaktor K in Abhängigkeit von Drehzahl und Ventilüberschneidung benötigt. Diese werden in den Schritten 307 und 308 berechnet und im Steuergeräte-RAM für die spätere Lastberechnung bereitgestellt. Die Werte von Ps0 und K werden für verschiedene Ventilüberschneidungen und Drehzahlen in Tabellen im Steuergerät-ROM abgelegt. Die Ermittlung der aktuellen Werte von Ps0 und K erfolgte durch Interpolation der aus diesen Tabellen entnommenen Größen.

Die Flußdiagramme Figur 4a und 4b zeigen die Erfassung des Luftdrucks im Saugrohr und die anschließende Berechnung der Luftfüllung. Das Programm in Figur 4a wird einmal pro Zündung in einer bestimmten Kurbelwellenstellung gestartet, z.B. immer 180 Grad vor Zünd-OT. In Schritt 401 wird der Saugrohrdruck vom Druckfühler 103 eingelesen und im Steuergeräte-RAM in der RAM-Zelle Ps1 gespeichert.

Das Programm gemäß Figur 4b wird ebenfalls einmal pro Zündung, jedoch an einer späteren Kurbelwinkelstellung aufgerufen (z.B. 90 Grad vor Zünd-OT). Zunächst wird in Block 402 noch einmal der Saugrohrdruck eingelesen und in der RAM-Zelle Ps2 abgelegt. Anschließend wird der Mittelwert der in den Schritten 401 und 402 eingelesenen Saugrohrdruckwerte gebildet (Schritt 403). Durch diese Mittelwertbildung werden die typischen Pulsationen des Saugrohrdrucks, die durch die Ansaugvorgänge der Zylinder verursacht werden, unterdrückt.

Im Schritt 404 wird aus dem Druckmittelwert die Luftfüllung des Zylinders gemäß Gleichung [9] bestimmt. Hierbei werden die in den Schritten 307 und 308 bestimmten Werte für den Porportionalitätsfaktor K und den Offset Ps0 verwendet.

Figur 5a und Figur 5b zeigen die Vorgehensweise für ein System, das mit einem Luftmassensensor ausgerüstet ist.

Für ein solches System muß zunächst der Saugrohrdruck aus der ins Saugrohr einströmenden gemessenen Luftmasse errechnet werden. Aus diesem Saugrohrdruck wird dann wie bei System mit Druckmessung die Luftfüllung des Zylinders bestimmt.

Für die Änderung dMs der im Saugrohr vorhandenen Frischluftmasse Ms während des Saughubs eines Zylinders gilt die Bilanzgleichung

$$dMs = Mdk - Mz \qquad [10]$$

Hierbei ist Mz wieder die vom Zylinder angesaugte Frischluftmasse und Mdk die im gleichen Zeitraum durch die Drosselklappe zugeströmte Luftmasse. Mit der Gleichung für ideale Gas gilt:

$$Ps * Vs = Ms * R * Ts \qquad [11]$$

wobei Ps der Saugrohrdruck, Vs das Saugrohrvolumen, R die Gaskonstante für Luft und Ts die Lufttemperatur im Saugrohr bedeuten.

Damit folgt für die Änderung dPs des Luftdrucks während des Saughubs:

$$dPs = Ps(k) - Ps(k-1) = dMs * \frac{R * Ts}{Vs} \qquad [12]$$

Ps(k) und Ps(k-1) sind dabei die in zwei aufeinanderfolgenden Rechenschritten k-1 und k ermittelten Werte des Saugrohrdrucks, wobei die Berechnung einmal pro Saughub eines Zylinders durchgeführt wird.

Durch Auflösen nach Ps(k) und Einsetzen der Bilanzgleichung [10] für die Luftmasse im Saugrohr folgt:

$$Ps(k) = Ps(k-1) + \frac{R * Ts}{Vs} * (Mdk - Mz) \qquad [13]$$

Für die vom Zylinder angesaugte Luftmasse kann die bereits für Systeme mit Saugrohrdruck bekannte Beziehung [9] eingesetzt werden.

Die durch die Drosselklappe einströmende Luftmasse Mdk kann aus dem Mittelwert Qmm der mit dem Sensor 114 gemessenen Luftmasse Qm errechnet werden:

$$Mdk = Qmm * dT \qquad [14]$$

wobei für die Rechenschrittweite dT gilt:

$$dT = \frac{2}{N * Z} \qquad [15]$$

Hierbei ist N die Motordrehzahl und Z die Anzahl der Zylinder. Dabei wurde vorausgesetzt, daß die Berechnung einmal pro Saughub durchgeführt wird.

Somit kann eine Rekursionsgleichung für die Berechnung des Saugrohrdrucks und der Luftfüllung angegeben werden:

$$Ps(k) = Ps(k-1) + \frac{R*Ts}{Vs} * (Qmm * \frac{2}{N*Z} - Mz(k-1)) \qquad [16]$$

sowie

$$Mz(k) = K * (Ps(k) - Ps0) \qquad [17]$$

Die Umsetzung der Rekursionsgleichungen [16] und [17] in ein Programm zur Berechnung der Luftfüllung ist in Figur 5a und 5b dargestellt.

Im Flußdiagramm Figur 5a, das sehr häufig durchlaufen werden muß, (in der Regel im 1ms-Zeitraster), wird in Block 501 zuerst geprüft, ob der Motor läuft. Bei laufendem Motor wird in Schritt 502 der Wert der Luftmassenströmung Qm vom Luftmassensensor 114 eingelesen. In Schritt 503 und 504 werden die eingelesenen Luftmassenwerte Qm sowie die Anzahl der Programmdurchläufe aufsummiert, um daraus in einem weiteren Programm den Mittelwert Qmm des Luftmassenstroms berechnen zu können.

Das Flußdiagramm Figur 5b beschreibt ein Programm zur Bestimmung des Saugrohrdrucks und daraus der Luftfüllung des Zylinders. Das Programm wird einmal pro Saughub gestartet, z.B. immer 90 Grad vor Zünd-OT.

Im Schritt 505 wird wieder geprüft, ob der Motor läuft. Bei laufendem Motor wird in Schritt 506 der Mittelwert Qmm des Luftmassenstroms bestimmt. Anschließend werden der Programmdurchlaufzähler und der Summenwert Qmsum in Schirtt 507 und 508 auf 0 zurückgesetzt, damit das Programm gemäß Figur 5a den Mittelwert während des nächsten Saugvorgangs bestimmen kann.

In Block 509 und 510 werden die aktuelle Drehzahl N und die Lufttemperatur Ts im Saugrohr von den Sensoren 104 und 111 eingelesen.

In Schritt 511 und 512 werden dann - ausgehend vom Saugrohrdruck Psalt und der Luftfüllung Mzalt aus dem vorigen Durchlauf des Programms - nach den oben hergeleiteten Rekursionsgleichungen [16] und [17] die aktuellen Werte Psneu und Mzneu für Saugrohrdruck und Luftfüllung ermittelt. Hierzu werden in Schritt 512 der Proportionalitätsfaktor K und der Offset Ps0 benötigt. Diese beiden Größen müssen mit einem Programm gemäß Figur 3b aus der Ventilüberschneidung und der Drehzahl bestimmt werden.

In Schritt 513 werden die aktuellen Werte von Saugrohrdruck und Luftfüllung in den RAM-Zellen Psalt und Mzalt für den nachfolgenden Programmdurchlauf gespeichert.

Beim Start des Motors müssen die RAM-Zellen Qmsum, Psalt und Mzalt sowie der Zähler für Programmdurchläufe des Programms gemäß Figur 5a auf die passenden Startwerte gesetzt werden. Wird in der Abfrage in Schritt 505 festgestellt, daß der Motor nicht läuft, dann werden in Schritt 514 der Summenwert der Luftmasse Msum sowie der Programmdurchlaufzähler auf 0 gesetzt. Solange der Motor steht, stellt sich im Saugrohr der Umgebungsdruck ein. Deshalb wird als Startwert für den Saugrohrdruck Psalt ein Schätzwert für den Umgebungsdruck eingesetzt (z.B. 950 mbar) . Als zugehöriger Startwert für die Luftfüllung des Zylinders wird der dem Umgebungsdruck entsprechende Maximalwert Mzmax verwendet.

Mögliche Alternativen:

Häufig wird darauf verzichtet, sowohl Einlaß- als auch Auslaßnockenwelle zu verstellen. In diesem Fall genügt es, bei der Berechnung der Ventilüberschneidung gemäß Figur 3a und 3b nur die Stellung der variablen Nockenwelle mit einem Sensor zu erfassen und anstelle des eingelesenen Sensorsignals der nicht verstellten Nockenwelle in den Berechnungen gemäß Figur 3b eine Konstante einzusetzen.

In anderen Fällen werden die Nockenwellen nicht kontinuierlich verstellt. Stattdessen werden nur zwischen zwei durch mechanische Anschläge festgelegte Stellungen hin- und hergeschaltet. Dabei wird aus Kostengründen auf einen Sensor für die Nockenwellenstellung (115 bzw. 115a) verzichtet. In diesem Fall muß die Stellung der Nockenwelle mit einem Modell geschätzt werden. Figur 6a zeigt beispielhaft den Zeitverlauf der Auslaßnockenwellenstellung bei Umschaltung des an das Verstellsystem 108a ausgegebenen Sollwerts Wasoll von Wasmin nach Wasmax. Als Näherung genügt für die Nachbildung des Istwertverlaufs ein Tiefpaßmodell erster Ordnung.

Figur 6b beschreibt das zugehörige Programm, das z.B. alle 10 ms durchlaufen wird. In Schritt 601 wird ermittelt, welcher der beiden möglichen Sollwerte an die Nockenwellenverstelleinrichtung 108a ausgegeben wird. Ist der untere Sollwert Wasmin aktiv, wird in Schritt 602 die aktuelle Nockenwellenstellung Wasneu aus dem im vorherigen Durchlauf bestimmten Wert Wasalt mit einem digitalen Tiefpaßfilter erster Ordnung berechnet:

$$\text{Wasneu} = \text{Wasalt} + (\text{Wasmin} - \text{Wasalt}) * \frac{dT}{Tnw} \qquad [18]$$

Dabei ist dT die Zeit zwischen zwei Programmdurchläufen und Tnw die Zeitkonstante der Nockenwellenänderung, die aus dem Zeitverlauf nach Figur 6a ermittelt werden kann. Wird dagegen im Schritt 601 festgestellt, daß der obere Sollwert Wasmax aktiv ist, erfolgt die Berechnung der Nockenwellenstellung gemäß Block 603, wobei hier der obere Sollwert Wasmax anstelle von Wasmin verwendet wird.

In Schritt 604 wird der aktuelle Wert der Nockenwellenstellung in der Speicherzelle Wasalt für den nächsten Rechenschritt abgelegt.

Die so ermittelte Auslaßnockenwellenstellung Wasneu kann dann im Programm in Figur 3b anstelle des vom Sensor 108a eingelesenen Wertes verwendet werden.

## Patentansprüche

1. Verfahren zur Berechnung des Frischluftanteils an der Gasfüllung des Arbeitsvolumens einer Brennkraftmaschine, wobei der Wechsel der Gasfüllung des Arbeitsvolumens durch einen Steuereingriff betriebsparameterabhängig beeinflußbar ist und wobei bei der Bestimmung des Frischluftanteils an der Gasfüllung des Arbeitsvolumens der Saugrohrdruck und als den Steuereingriff charakterisierende Größen die Ventilüberschneidung, das heißt der Winkelbereich, über den ein Einlaßventil und ein Auslaßventil eines einzelnen Arbeitsvolumens gemeinsam geöffnet sind, sowie zusätzlich die Lage dieses Winkelbereichs relativ zu einem Bezugswinkel der Kurbelwelle, beispielsweise dem Winkel, der einem Totpunkt eines Kolbens der Brennkraftmaschine entspricht, benutzt werden.

2. Verfahren nach Anspruch 1, dadurch gekennzeichnet, daß der Saugrohrdruck gemessen wird.

3. Verfahren nach Anspruch 1, dadurch gekennzeichnet, daß der Saugrohrdruck mit Hilfe einer Bilanz des dem Saugrohr zuströmenden und abfließenden Frischluftmassenstroms berechnet wird, wobei der abfließende Frischluftmassenstrom dem Frischluftanteil an der Gasfüllung des Arbeitsvolumens entspricht.

4. Verfahren zur Berechnung des Frischluftanteils an der Gasfüllung des Arbeitsvolumens einer Brennkraftmaschine, wobei der Wechsel der Gasfüllung des Arbeitsvolumens durch einen Steuereingriff betriebsparameterabhängig beeinflußbar ist, wobei bei der Bestimmung des Frischluftanteils an der Gasfüllung des Arbeitsvolumens der Saugrohrdruck und wenigstens eine den Steuereinriff charakterisierende Größe berücksichtigt wird, dadurch gekennzeichnet, daß die jeweils kleinere, während der Ventilüberschneidung wirksame Öffnung des Arbeitsvolumens zum Einlaß- oder Auslaßbereich der Brennkraftmaschine, integriert über die Zeitdauer der Ventilüberschneidung, erfaßt wird und als charakterisierende Größe für den Einfluß des Steuereingriffs verwendet wird.

5. Verfahren nach Anspruch 4, dadurch gekennzeichnet, daß der Saugrohrdruck gemessen wird.

6. Verfahren nach Anspruch 5, dadurch gekennzeichnet, daß der Saugrohrdruck mit Hilfe einer Bilanz des dem Saugrohr zuströmenden und abfließenden Frischluftmassenstroms berechnet wird, wobei der abfließende Frischluftmassenstrom dem Frischluftanteil an der Gasfüllung des Arbeitsvolumens entspricht.

## Claims

1. Method for calculating the proportion of fresh air in the gas charge in the working volume of an internal combustion engine, it being possible to influence the changing of the gas charge in the working volume as a function of operating parameters by means of a control intervention, and the intake-pipe pressure being used in the determination of the proportion of fresh air in the gas charge in the working volume, and the valve overlap, i.e. the angular range over which an inlet valve and an outlet valve of a single working volume are open together, and, in addition, the position of this angular range relative to a reference angle of the crankshaft, for example the angle corresponding to a dead centre position of a piston of the internal combustion engine, are used as the variables which characterize the control intervention.

2. Method according to Claim 1, characterized in that the intake-pipe pressure is measured.

3. Method according to Claim 1, characterized in that the intake-pipe pressure is calculated with the aid of a balance of the mass flow of fresh air flowing to the intake pipe and that flowing out of it, the outflowing mass flow of fresh air corresponding to the proportion of fresh air in the gas charge in the working volume.

4. Method for calculating the proportion of fresh air in the gas charge in the working volume of an internal combustion engine, it being possible to influence the changing of the gas charge in the working volume as a function of operating parameters by means of a control intervention, the intake-pipe pressure and at least one variable which characterizes control intervention being taken into account in the determination of the proportion of fresh air in the gas charge in the working volume, characterized in that the smaller of the openings, effective during the valve overlap, of the working volume to the inlet or outlet region of the internal combustion engine, integrated with respect to the duration of the valve overlap, is recorded and used as a characterizing variable for the influence of the control intervention.

5. Method according to Claim 4, characterized in that the intake-pipe pressure is measured.

6. Method according to Claim 5, characterized in that the intake-pipe pressure is calculated with the aid of a balance of the mass flow of fresh air flowing to the intake pipe and that flowing out of it, the outflowing mass flow of fresh air corresponding to the proportion of fresh air in the gas charge in the working volume.

**Revendications**

1. Procédé de calcul de la proportion en air frais dans la charge de gaz du volume actif d'un moteur à combustion interne, selon lequel l'échange du remplissage de gaz du volume actif peut être influencé par une action de commande dépendant des paramètres de fonctionnement et, pour la détermination de la proportion d'air frais du remplissage de gaz du volume actif, on utilise la pression dans la tubulure d'aspiration et, comme grandeurs caractérisant l'action de commande, on utilise le chevauchement des soupapes, c'est-à-dire la plage angulaire dans laquelle une soupape d'admission et une soupape d'échappement d'un même volume actif sont ouvertes simultanément, ainsi qu'en outre la position de cette plage angulaire par rapport à l'angle de référence du vilebrequin par exemple l'angle par rapport à un point mort haut d'un piston du moteur à combustion interne.

2. Procédé selon la revendication 1,
caractérisé en ce qu'
on mesure la pression dans la tubulure d'aspiration.

3. Procédé selon la revendication 1,
caractérisé en ce qu'
on calcule la pression dans la tubulure d'aspiration à l'aide d'un bilan du débit massique d'air frais entrant et sortant de la tubulure d'aspiration, et le débit massique d'air frais sortant de cette tubulure, correspondant à la proportion d'air frais du remplissage de gaz du volume actif.

4. Procédé de calcul de la proportion d'air frais du remplissage de gaz du volume actif d'un moteur à combustion interne, selon lequel l'échange du remplissage de gaz du volume actif est influencé par une intervention de commande dépendant des paramètres de fonctionnement et, pour déterminer la proportion d'air frais du remplissage de gaz du volume actif, on tient compte de la pression dans la tubulure d'aspiration et d'au moins une grandeur caractérisant l'action de commande,
caractérisé en ce qu'
on saisit la plus petite ouverture active, pendant le chevauchement des soupapes du volume actif, comme plage d'admission ou d'échappement du moteur à combustion interne, intégrée en fonction de la durée du chevauchement des soupapes, et on l'utilise comme grandeur caractéristique de l'influence de l'action de commande.

5. Procédé selon la revendication 4,
caractérisé en ce qu'
on mesure la pression dans la tubulure d'aspiration.

6. Procédé selon la revendication 5,
caractérisé en ce qu'
on calcule la pression dans la tubulure d'aspiration à l'aide d'un bilan du débit massique d'air frais entrant et sortant de la tubulure d'aspiration, et le débit massique d'air frais sortant correspond à la proportion d'air frais du remplissage de gaz du volume actif.

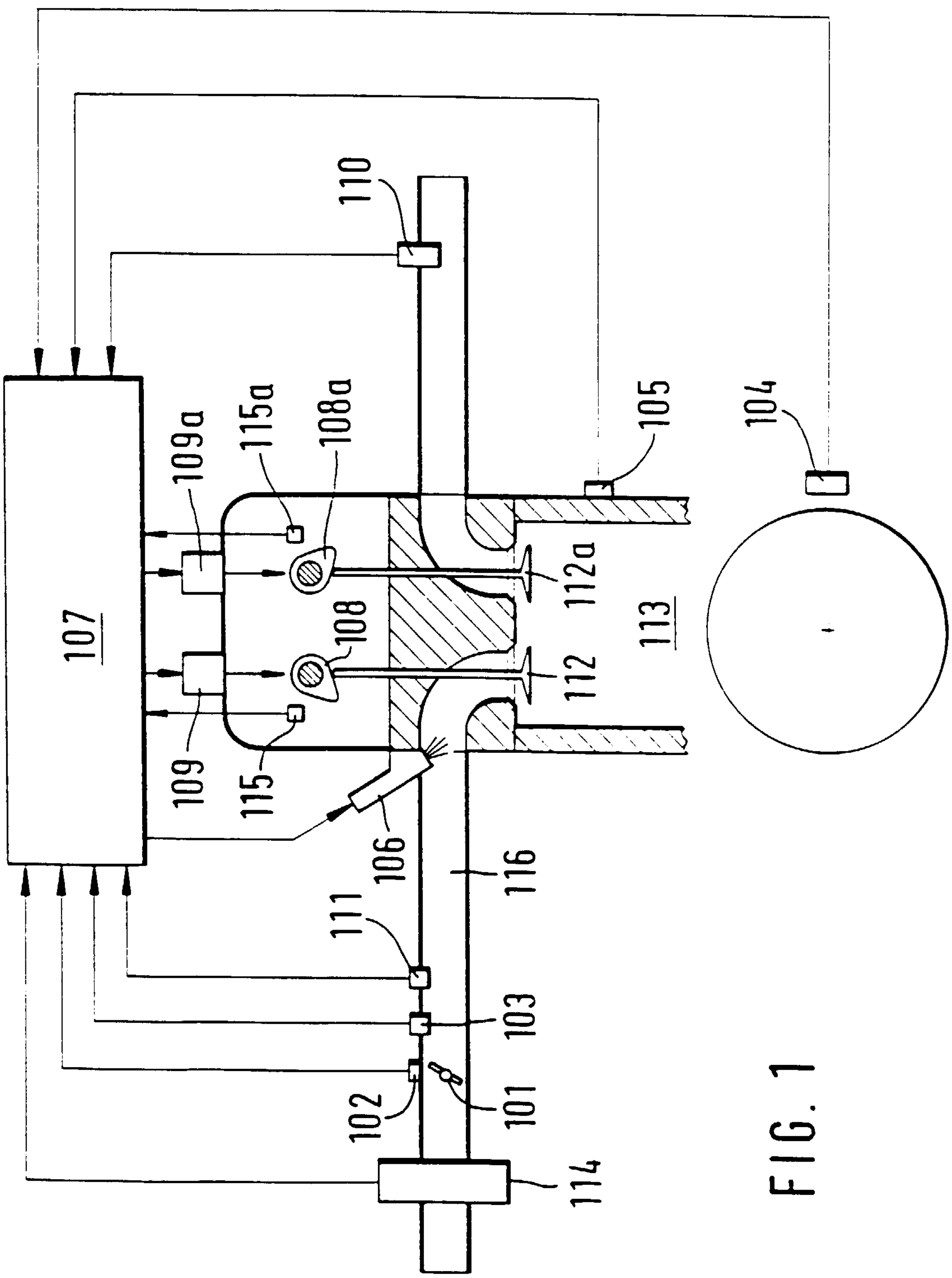
107
109a
115a
108a
110
105
104
108
112a
113
112
109
115
106
116
111
103
102
101
114

FIG. 1

FIG. 2

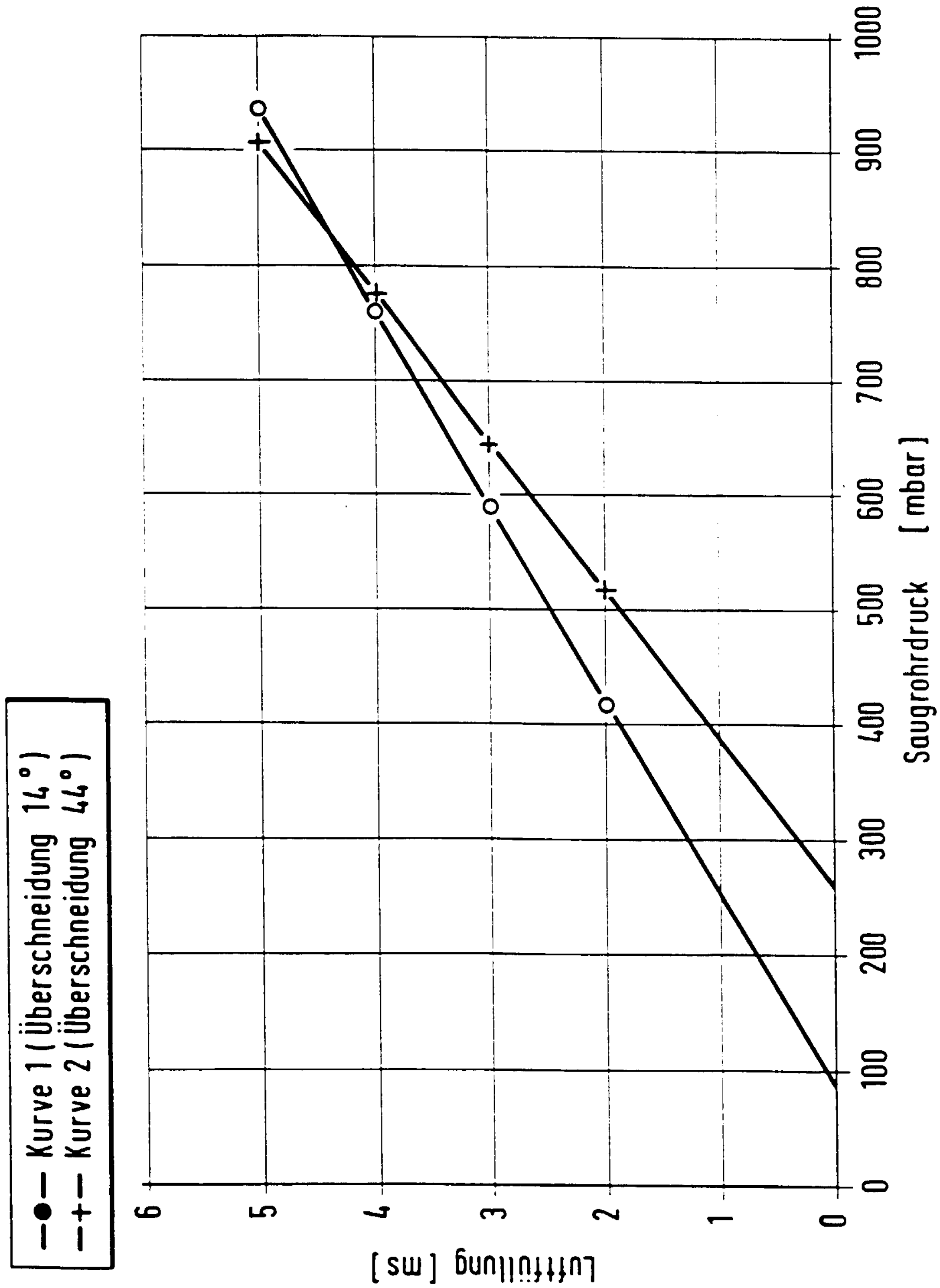
Kurve 1 (Überschneidung 14°)
Kurve 2 (Überschneidung 44°)
Luftfüllung [ms]
0
1
2
3
4
5
6
0
100
200
300
400
500
600
700
800
900
1000
Saugrohrdruck [mbar]

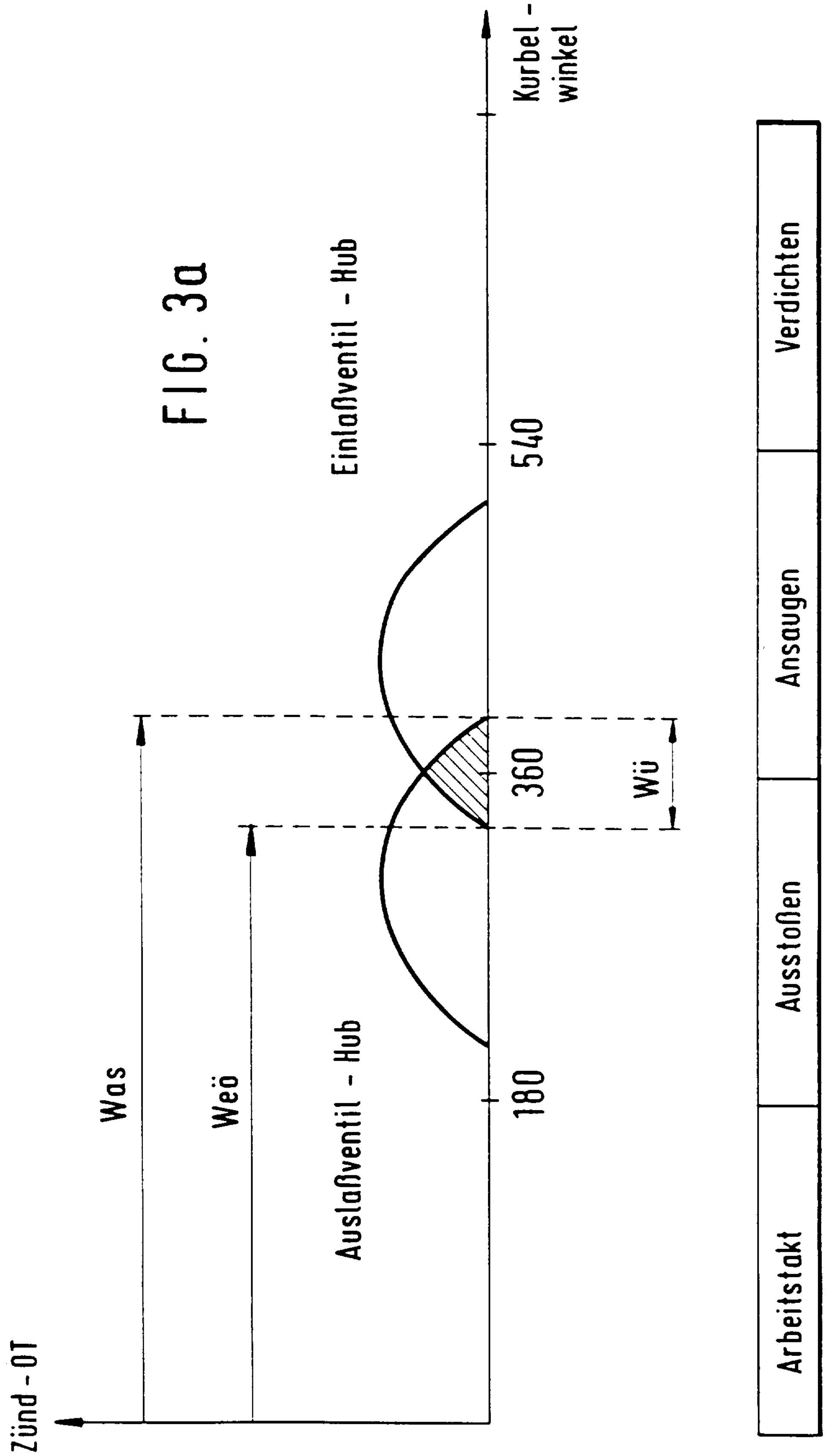
Kurbel - winkel
Einlaßventil - Hub
540
Verdichten
Ansaugen
360
Wü
Ausstoßen
180
Auslaßventil - Hub
Was
Weö
Zünd - OT
Arbeitstakt

FIG. 3a

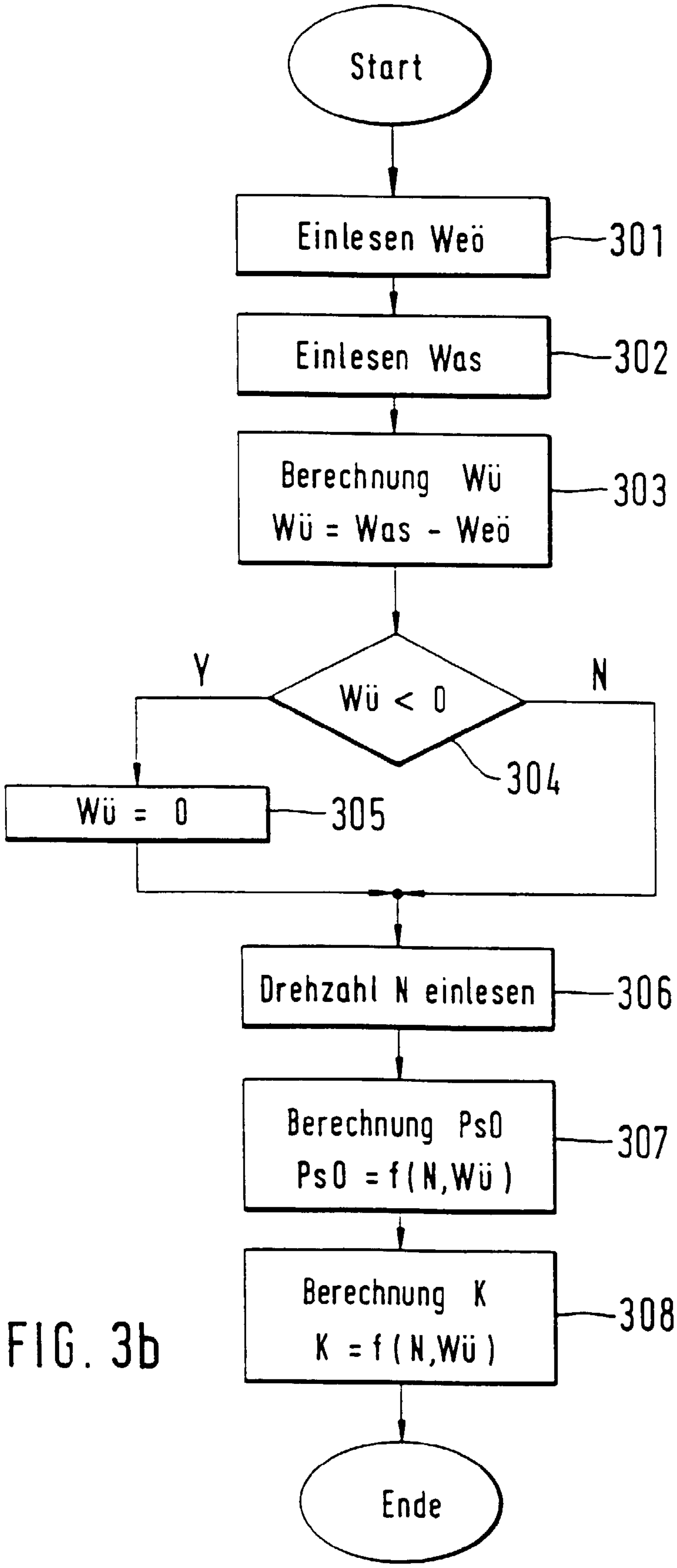
Start
Einlesen Weö
301
Einlesen Was
302
Berechnung Wü
Wü = Was - Weö
303
Y
Wü < 0
N
304
Wü = 0
305
Drehzahl N einlesen
306
Berechnung Ps0
Ps0 = f(N,Wü)
307
Berechnung K
K = f(N,Wü)
308
Ende

FIG. 3b

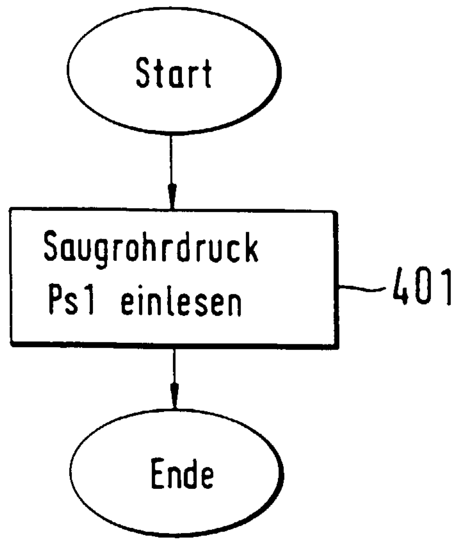
Start
Saugrohrdruck
Ps1 einlesen
401
Ende

FIG. 4a

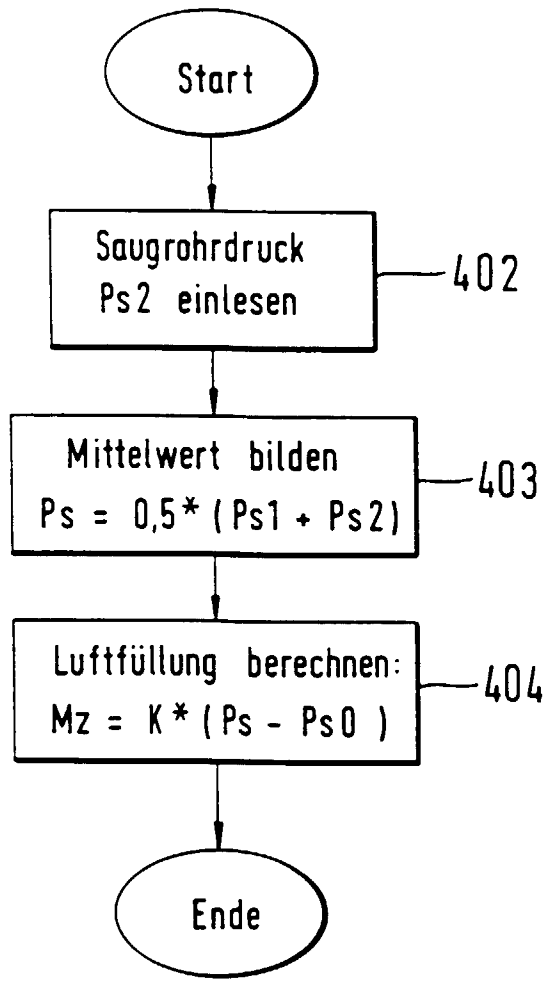
Start
Saugrohrdruck
Ps2 einlesen
402
Mittelwert bilden
Ps = 0,5* (Ps1 + Ps2)
403
Luftfüllung berechnen:
Mz = K* (Ps - Ps0 )
404
Ende

FIG. 4b

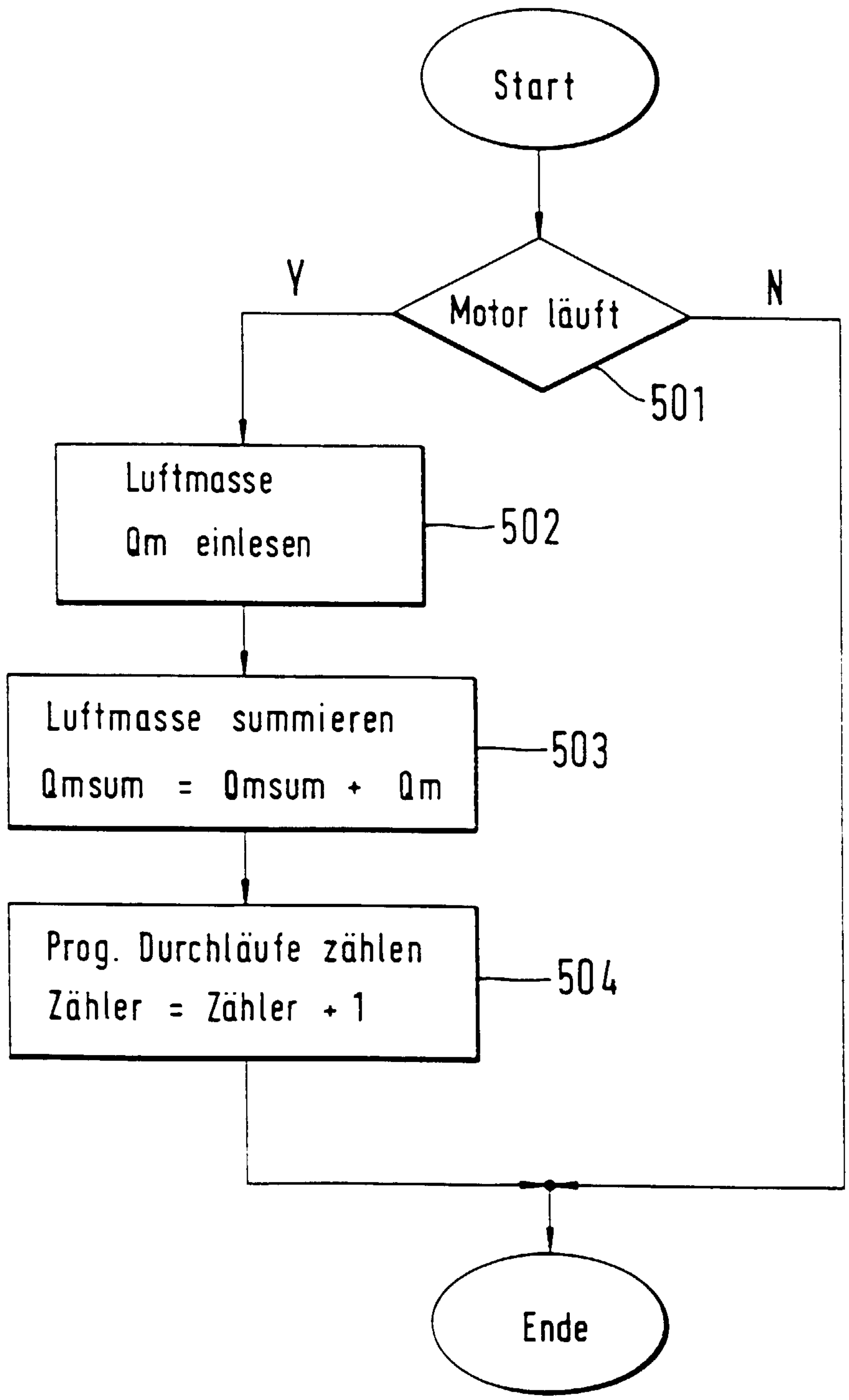
Start
Y
N
Motor läuft
501
Luftmasse
Qm einlesen
502
Luftmasse summieren
Qmsum = Qmsum + Qm
503
Prog. Durchläufe zählen
Zähler = Zähler + 1
504
Ende

FIG. 5a

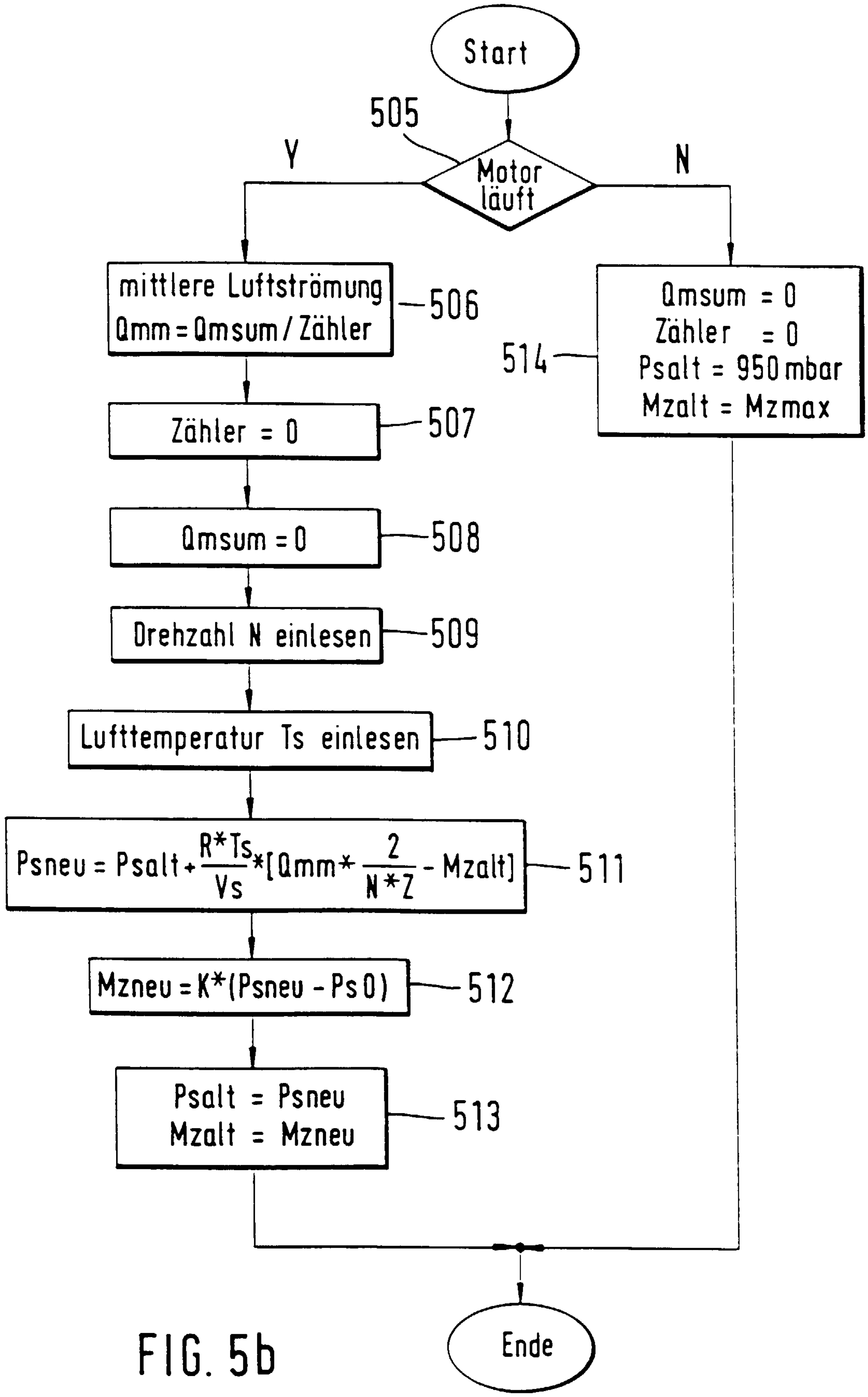
Start
505
Y
N
Motor läuft
mittlere Luftströmung
Qmm = Qmsum / Zähler
506
Zähler = 0
507
Qmsum = 0
508
Drehzahl N einlesen
509
Lufttemperatur Ts einlesen
510
Psneu = Psalt + R*Ts / Vs * [Qmm * 2 / N*Z - Mzalt]
511
Mzneu = K*(Psneu - Ps0)
512
Psalt = Psneu
Mzalt = Mzneu
513
Qmsum = 0
Zähler = 0
Psalt = 950 mbar
Mzalt = Mzmax
514
Ende

FIG. 5b

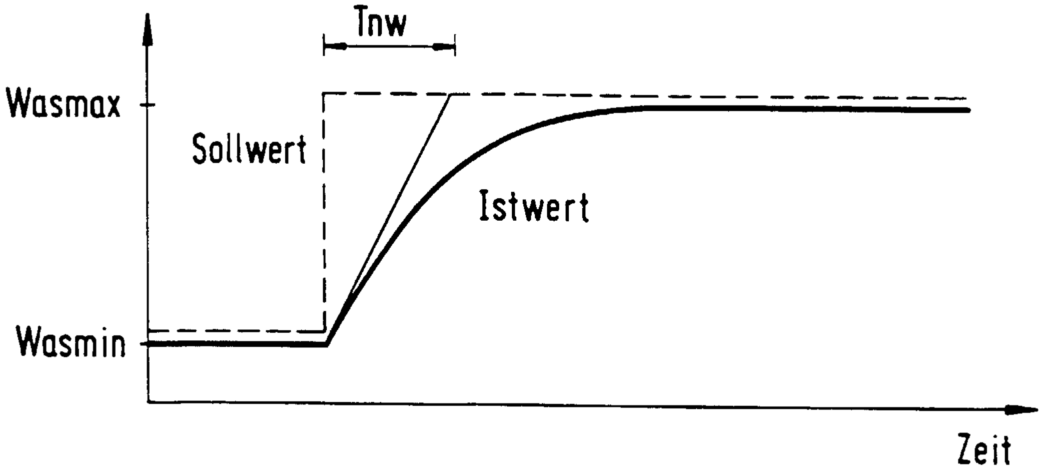
Tnw
Wasmax
Sollwert
Istwert
Wasmin
Zeit

FIG. 6a

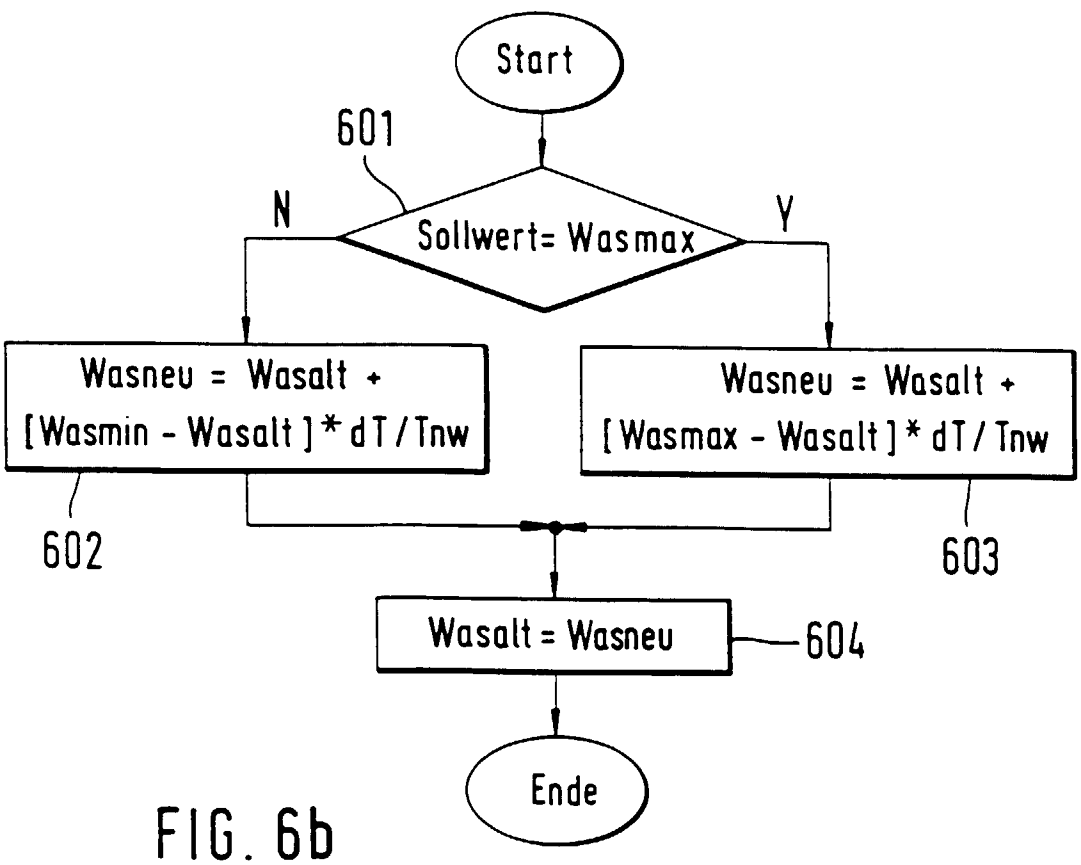
Start
601
N
Sollwert= Wasmax
Y
Wasneu = Wasalt + [Wasmin - Wasalt ] * dT / Tnw
Wasneu = Wasalt + [Wasmax - Wasalt ] * dT / Tnw
602
603
Wasalt = Wasneu
604
Ende

FIG. 6b